# EUROPÄISCHE PATENTSCHRIFT

(11) **EP 3 850 413 B1**
(45) Veröffentlichungstag und Bekanntmachung des Hinweises auf die Patenterteilung: **01.11.2023**
(21) Anmeldenummer: 19762951.2
(22) Anmeldetag: 03.09.2019
(51) Int. Cl.: B23K 26/046, G02B 7/08, B23K 26/06, G02B 15/14, G02B 19/00, G02B 27/09

(54) **VORRICHTUNG UND VERFAHREN ZUR FOKUSVERSTELLUNG FÜR EIN GERÄT ZUR MATERIALBEARBEITUNG UND GERÄT ZUR LASERMATERIALBEARBEITUNG**
APPARATUS AND METHOD FOR FOCUS ADJUSTMENT FOR A MATERIAL PROCESSING DEVICE, AND DEVICE FOR LASER MATERIAL PROCESSING
DISPOSITIF ET PROCÉDÉ SERVANT À AJUSTER LA MISE AU POINT POUR UN APPAREIL D'USINAGE DE MATÉRIAU ET APPAREIL D'USINAGE DE MATÉRIAU AU LASER

(30) Priorität: 10.09.2018 DE 102018007212; 13.03.2019 DE 102019106443
(43) Veröffentlichungstag der Anmeldung: 21.07.2021
(73) Patentinhaber: JENOPTIK Optical Systems GmbH, 07745 Jena (DE)
(72) Erfinder: WERSCHNIK, Jan, 07745 Jena (DE); FRANZ, Stefan, 07751 Jena (DE); ESSELBACH, Achmed, 07743 Jena (DE)
(74) Vertreter: Waldauf, Alexander
(86) Internationale Anmeldenummer: PCT/EP2019/073428
(87) Internationale Veröffentlichungsnummer: WO 2020/053031

(56) Entgegenhaltungen:
- DE-A1-102008 048 502
- DE-A1-102011 117 607
- DE-A1-102011 121 928

## Beschreibung

Der vorliegende Ansatz bezieht sich auf eine Vorrichtung und ein Verfahren zur Fokusverstellung für ein Gerät zur Materialbearbeitung und auf ein Gerät zur Materialbearbeitung, insbesondere zur Lasermaterialbearbeitung.

In der Lasermaterialbearbeitung müssen Strahlgrößen und Fokuslagen sehr schnell verstellt werden. Diese Verstellung benötigt man entweder zur gezielten Einstellung der Fokuslage bei der 3D-Bearbeitung oder zur Kompensation von Fehlern, z.B. bei nicht ebene Oberflächen oder Schwankungen im System.

Die US 6,813,225 B2 offenbart ein Gerät zum Bewegen eines optischen Elements in einem optomechanischem System. Die DE 10 2011 117 607 A1 zeigt eine Optik für Laserstrahlung mit einstellbarem Fokusdurchmesser. Die Erfindung betrifft weiter die Verwendung der Optiken in Bearbeitungsoptiken für die Lasermaterialbearbeitung zur Fokussierung der Laserstrahlung auf das zu bearbeitende Werkstück. Die DE 10 2008 048 502 A1 offenbart eine optische Vorrichtung zur Fokussierung eines Laserstrahls in einen Arbeitsfokus, insbesondere zur Fokussierung eines Laserstrahls in einem Laserbearbeitungskopf zur Materialbearbeitung.

### Offenbarung der Erfindung

Vor diesem Hintergrund werden mit dem vorliegenden Ansatz eine Vorrichtung und ein Verfahren zur Fokusverstellung für ein Gerät zur Materialbearbeitung und ein Gerät zur Materialbearbeitung gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen darin, dass eine Strahlcharakteristik eines zur Materialbearbeitung einsetzbaren Strahls sehr schnell und schwingungsfrei durchgeführt werden kann. Die Strahlcharakteristik kann beispielsweise eine Strahlgröße oder Strahlfokussierung des Strahls betreffen. So wird insbesondere eine schnelle Fokusverstellung, beispielsweise in der Lasermaterialbearbeitung ermöglicht.

Eine Vorrichtung zur Fokusverstellung für ein Gerät zur Lasermaterialbearbeitung, das eine bewegbar angeordnete erste Linseneinheit, die eine erste Linse umfasst, und eine bewegbar angeordnete zweite Linseneinheit, die eine zweite Linse umfasst, aufweist, weist eine Verstelleinrichtung auf, die ausgebildet ist, um die erste Linseneinheit in eine erste Richtung und die zweite Linseneinheit in eine der ersten Richtung entgegengesetzte zweite Richtung zu bewegen, um einen Abstand zwischen der ersten Linse und der zweiten Linse für die Fokusverstellung zu verstellen.

Das Gerät zur Lasermaterialbearbeitung kann einen Laser aufweisen, der ausgebildet ist, um einen Laserstrahl auszusenden. Der Laserstrahl ist dabei beispielhaft gewählt und kann durch einen anderen geeigneten Strahl ersetzt werden. Der Laserstrahl kann durch eine Optik geführt werden, die zumindest die erste und die zweite Linse umfassen kann. Durch die Optik kann der Laserstrahl geformt werden. Der aus dem Gerät austretende Laserstrahl kann zur Bearbeitung eines Materials verwendet werden, auf das der Laserstrahl auftrifft. Die Vorrichtung zur Fokusverstellung kann als fester Bestandteil des Geräts oder als ein Einsatz ausgeführt sein, der in das Gerät integriert werden kann. Durch die von der Verstelleinrichtung angesteuerten oder ausgeführten Bewegungen der ersten und zweiten Linse wird der Abstand der Linsen zueinander verstellt. Dazu kann die Verstelleinrichtung zumindest einen Aktor und/oder eine Schnittstelle zum Bereitstellen von Steuersignalen zum Ansteuern eines Aktors umfassen. Die beiden Linsen sind so angeordnet und ausgeformt, dass sich durch die Verstellung des Abstands der Linsen die die Fokuslage des Laserstrahls verändert. Dementsprechend kann über die Verstellung des Abstands auch die Strahlgröße verändert werden. Eine Linseneinheit kann nur die entsprechende Linse oder zusätzlich noch ein oder mehrere weitere Elemente umfassen. Beispielsweise kann eine Linseneinheit neben der Linse eine Linsenhalterung und/oder ein Verfahrelement zum Verfahren der Linse umfassen. Die Linseneinheiten können die bei der Bewegung der Linsen bewegten Massen definieren.

Gemäß einer Ausführungsform können Fokussier- oder Vergrößerungsbewegungen mit Hilfe eines Aktors und den Linsen durchgeführt werden. Bei schnellen Bewegungen der Linsen entsteht durch die Änderung der Impulse der Linseneinheiten Kräfte auf ein äußeres System, z.B. ein Gehäuse oder eine Halterung eines Verstellers. Durch die entgegengerichteten Bewegungen der Linseneinheiten kann vermieden werden, dass diese wechselnden Kräfte Schwingungen in der auch als Maschine bezeichneten Gerät anregen, die zu schlechten Ergebnissen führen können. Auch kann auf eine stabile und somit aufwendige Konstruktion verzichtet werden, die ansonsten zur Vermeidung von Schwingungen erforderlich wäre. Durch die entgegengerichteten Bewegungen wird die Entwicklung eines kompakten, schnellen, schwingungsarmen z-Verstellers mit großer optischer Wirkung ermöglicht.

Die Verstelleinrichtung ist ausgebildet, um einen ersten Impulsübertrag an die erste Linseneinheit bereitzustellen, um die erste Linse in die erste Richtung zu bewegen, und einen zweiten Impulsübertrag an die zweite Linseneinheit bereitzustellen, um die zweite Linse in die zweite Richtung zu bewegen, wobei der erste Impulsübertrag und der zweite Impulsübertrag betragsmäßig gleich sind. Die Impulsüberträge können beispielsweise zwischen einer Trägereinheit der Vorrichtung oder des Geräts und den Linseneinheiten erfolgen. Durch die Impulsüberträge können die Linseneinheiten gegenüber der Trägereinheit beschleunigt werden. Wenn die Impulsüberträge betragsmäßig gleich jedoch entgegengesetzt gerichtet sind, können sich bei der Bewegung der Linsen auftretende Störeffekte gegenseitig kompensieren.

Die Verstelleinrichtung kann ausgebildet sein, um die erste Linseneinheit um eine erste Wegstrecke und die zweite Linseneinheit um eine zweite Wegstrecke zu bewegen. Dabei können die erste Wegstrecke und die zweite Wegstrecke betragsmäßig gleich sein. Dies bietet sich beispielsweise an, wenn die erste Linseneinheit und die zweite Linseneinheit die gleiche Masse aufweisen. Dies kann der Fall sein, wenn die erste und die zweite Linse identisch ausgeformt sind.

Alternativ können die erste Wegstrecke und die zweite Wegstrecke betragsmäßig unterschiedlich sein. Dies bietet sich beispielsweise an, wenn die erste Linseneinheit und die zweite Linseneinheit ungleiche Massen aufweisen. Aufgrund der unterschiedlichen Wegstrecken, die die beiden Linseneinheiten zurücklegen, kann dennoch eine Impulskompensierung erfolgen.

Dabei kann die Verstelleinrichtung ausgebildet sein, um die erste Linseneinheit während einer ersten Zeitdauer und die zweite Linseneinheit während einer zweiten Zeitdauer zu bewegen. Die erste Zeitdauer und die zweite Zeitdauer können zum selben Zeitpunkt starten und betragsmäßig gleich sein. Wenn die erste Linse nur bewegt wird, wenn sich auch die zweite Linse bewegt, und umgekehrt, können sich die durch die Bewegungen hervorgerufenen Störeffekte gegenseitig kompensieren.

Die Verstelleinrichtung kann ausgebildet sein, um während der ersten Zeitdauer eine erste Kraft auf die erste Linseneinheit und während der zweiten Zeitdauer eine zweite Kraft auf die zweite Linseneinheit auszuüben. Dabei können die erste Kraft und die zweite Kraft einander entgegengerichtet und betragsmäßig gleich sein. Dadurch können durch die Krafteinwirkungen hervorgerufene Schwingungen einander kompensieren.

Die Vorrichtung kann eine Sensoreinrichtung zum Erfassen eines ersten Beschleunigungswerts, der eine Beschleunigung der ersten Linseneinheit repräsentiert, und zusätzlich oder alternativ zum Erfassen eines zweiten Beschleunigungswerts, der eine Beschleunigung der zweiten Linseneinheit repräsentiert, umfassen. Die Verstelleinrichtung kann ausgebildet sein, die erste Linseneinheit und die zweite Linseneinheit unter Verwendung des ersten Beschleunigungswerts und des zweiten Beschleunigungswerts zu bewegen. Beispielsweise kann die Verstelleinrichtung ausgebildet sein, um die Linseneinheiten so zu bewegen, dass die Beschleunigungen der beiden Linseneinheiten einander entgegengesetzt sind und aufeinander abgestimmt sind.

Die Vorrichtung kann zwei erste Festkörpergelenken zum beweglichen Lagern der ersten Linseneinheit und zwei zweiten Festkörpergelenken zum beweglichen Lagern der zweiten Linseneinheit umfassen. Jede der Linseneinheiten kann dabei zwischen zwei Festköpergelenken angeordnet sein, die auf diese Weise eine Linearführung für die jeweilige Linseneinheit ausformen. Die Festkörpergelenke ermöglichen im Unterschied zu einer eine Schiene und einen Schlitten aufweisenden Führung eine reibungsfreie Bewegung der jeweiligen Linseneinheit.

Ein entsprechendes Gerät zur Materialbearbeitung weist die folgenden Merkmale auf:
eine Bereitstellungseinrichtung zum Bereitstellen eines Strahls;
eine bewegbar angeordnete erste Linseneinheit, die eine erste Linse umfasst, und eine bewegbar angeordnete zweite Linseneinheit, die eine zweite Linse umfasst, wobei ein Strahlengang des Strahls durch die erste Linse und die zweite Linse geführt ist; und
eine genannte Vorrichtung zur Fokusverstellung des Geräts.

Bei dem Strahl kann es sich um einen Lichtstrahl oder Teilchenstrahl, beispielsweise um einen Laserstrahl handeln. Somit kann es sich bei der Bereitstellungseinrichtung um eine geeignete Strahlungsquelle, wie beispielsweise einen Laser handeln. Somit kann die genannte Vorrichtung vorteilhaft im Zusammenhang mit einem Gerät zur Lasermaterialbearbeitung eingesetzt werden. Je nach Anwendungsfall kann als Laser ein geeigneter Lasertyp eingesetzt werden, wie beispielsweise ein Diodenlaser, ein Gaslaser oder ein Festkörperlaser.

Ein Verfahren zur Fokusverstellung für ein Gerät zur Lasermaterialbearbeitung, das eine bewegbar angeordnete erste Linseneinheit, die eine erste Linse umfasst, und eine bewegbar angeordnete zweite Linseneinheit aufweist, die eine zweite Linse umfasst, weist den folgenden Schritt auf:
Bewegen der ersten Linseneinheit in eine erste Richtung und der zweiten Linseneinheit in eine der ersten Richtung entgegengesetzten zweiten Richtung, um einen Abstand zwischen der ersten Linse und der zweiten Linse für die Fokusverstellung zu verstellen.

Der oder die Schritt/e des Verfahrens können unter Verwendung einer Ausführungsform der genannten Vorrichtung umgesetzt oder ausgeführt werden. Die Vorrichtung kann dabei rein mechanisch oder elektromechanisch ausgeführt sein.

Der Ansatz wird nachstehend anhand der beigefügten Zeichnungen beispielhaft näher erläutert. Es zeigen:
Fig. 1 eine schematische Darstellung eines Geräts zur Lasermaterialbearbeitung gemäß einem Ausführungsbeispiel;
Fig. 2 zwei Linsen für ein Gerät zur Lasermaterialbearbeitung gemäß einem Ausführungsbeispiel;
Fig. 3 zwei Linsen für ein Gerät zur Lasermaterialbearbeitung gemäß einem Ausführungsbeispiel;
Fig. 4 eine Linsenanordnung für ein Gerät zur Lasermaterialbearbeitung gemäß einem Ausführungsbeispiel;
Fig. 5 eine Vorrichtung zur Fokusverstellung für ein Gerät zur Lasermaterialbearbeitung gemäß einem Ausführungsbeispiel;
Fig. 6 eine Vorrichtung zur Fokusverstellung gemäß einem Ausführungsbeispiel;
Fig. 7 eine Vorrichtung zur Fokusverstellung gemäß einem Ausführungsbeispiel;
Fig. 8 eine Vorrichtung zur Fokusverstellung gemäß einem Ausführungsbeispiel;
Fig. 9 ein Element zur Festkörperführung gemäß einem Ausführungsbeispiel;
Fig. 10 ein Element zur Festkörperführung gemäß einem Ausführungsbeispiel;
Fig. 11 ein Element zur Festkörperführung gemäß einem Ausführungsbeispiel;
Fig. 12 ein Element zur Festkörperführung gemäß einem Ausführungsbeispiel;
Fig. 13 eine Außenansicht eines Gehäuses für eine Linearführung mittels Festkörpergelenk gemäß einem Ausführungsbeispiel;
Fig. 14 eine Linearführung mittels Festkörpergelenk gemäß einem Ausführungsbeispiel;
   und
Fig. 15 ein Ablaufdiagramm eines Verfahrens zur Lasermaterialbearbeitung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

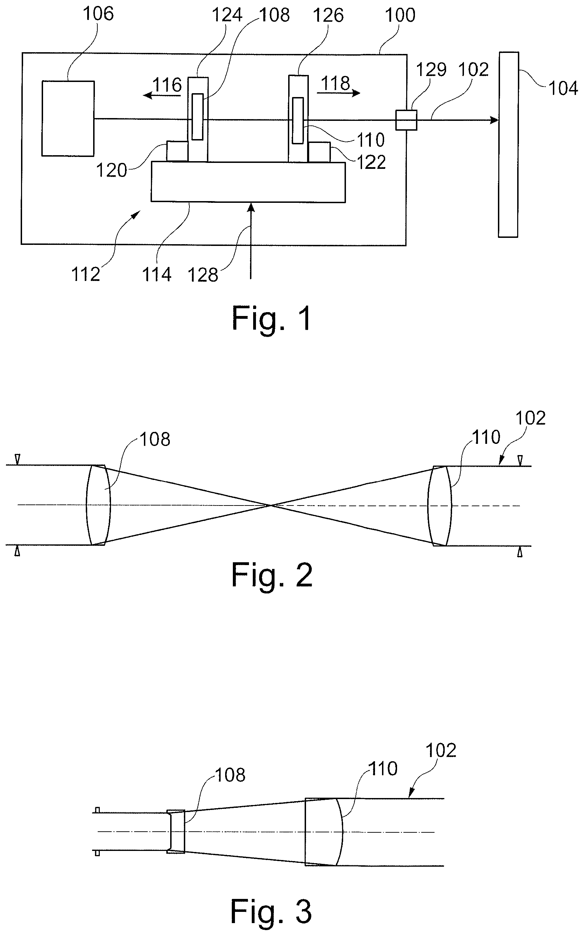

Fig. 1 zeigt eine schematische Darstellung eines Geräts 100 zur Lasermaterialbearbeitung gemäß einem Ausführungsbeispiel. Das Gerät 100 wird verwendet, um einen Laserstrahl 102 auszusenden. Der Laserstrahl 102 ist beispielhaft auf ein Werkstück 104 gerichtet, das unter Verwendung des Laserstrahls 102 bearbeitet wird. Anstelle eines Laserstrahls kann auch ein andersartiger Strahl eingesetzt werden.

Das Gerät 100 weist als Bereitstellungseinrichtung beispielhaft einen Laser 106 auf, der ausgebildet ist, um den Laserstrahl 102 zu erzeugen. Der Strahlengang des Laserstrahls 102 ist durch eine Optik des Geräts 100 geführt, die zumindest eine erste Linse 108 und eine zweite Linse 110 umfasst. Beispielhaft liegt der Fokus des Laserstrahls 102 auf einer dem Gerät 100 zugewandten Oberfläche des Werkstücks 104. Der Fokus wird gemäß diesem Ausführungsbeispiel durch einen Abstand zwischen den Linsen 108, 110 eingestellt. Durch eine Änderung des Abstands kann eine Lage des Fokus verändert werden. Entsprechend kann durch die Änderung des Abstands ein Strahldurchmesser des Laserstrahls 102, beispielsweise auf Höhe der Oberfläche des Werkstücks 104, verändert werden.

Das Gerät 100 weist eine Vorrichtung 112 zur Fokusverstellung auf. Die Vorrichtung 112 wird verwendet, um die Fokusverstellung durch eine Verstellung des Abstands zwischen den Linsen 108, 110 zu bewirken. Gemäß unterschiedlichen Ausführungsbeispielen ist die Vorrichtung 112 fester Bestandteil des Geräts 100 oder als eine eigenständige Einheit ausgeführt, um die das Gerät 100 ergänzt werden kann. Zum verstellen des Abstands zwischen den Linsen 108, 110, weist die Vorrichtung 112 eine Verstelleinrichtung 114 auf. Die Verstelleinrichtung 114 ist mit den Linsen 108, 110 gekoppelt und ausgebildet, um die Linsen 108, 110 während eines Verstellvorgangs zum Verstellen des Fokus des Laserstrahls 102 in einander entgegengesetzte Richtungen 116, 118 zu bewegen, um den Abstand zwischen den Linsen 108, 110 und somit den Fokus des Laserstrahls 102 zu verstellen. Dabei führen die Linsen 108, 110 beispielsweise einander entgegengesetzte Linearbewegungen entlang einer z-Achse auf. Beispielhaft wird die erste Linse 108 dazu in eine erste Richtung 116 und die zweite Linse 110 in eine zweite Linse 118 bewegt, wodurch sich der Abstand zwischen den Linsen 108, 110 vergrößert. Gemäß einem Ausführungsbeispiel weist die Verstelleinrichtung 114 zumindest einen Aktor auf, der zum Bewegen der Linsen 108, 110 mit den Linsen 108, 110 gekoppelt ist. Die Verstelleinrichtung 114 ist beispielsweise ausgebildet, um die erste Linse 108 entsprechend einem vorgegebenen ersten Zeit-Weg-Verlauf in der ersten Richtung 116 und die zweite Linse 110 entsprechend einem vorgegebenen zweiten Zeit-Weg-Verlauf in die zweite Richtung 118 zu bewegen.

Zum Steuern der Bewegungen der Linsen 108, 110 weist die Vorrichtung 112 beispielsweise eine geeignete Mechanik oder elektrische Steuerung auf. Gemäß einem Ausführungsbeispiel ist die Vorrichtung 112 ausgebildet, um die Bewegungen der Linsen 108, 110 zu regeln. Dazu weist die Vorrichtung 112 beispielsweise eine Sensoreinrichtung auf, die ausgebildet ist, um die Bewegungen der Linsen 108, 110 zu erfassen. Beispielhaft weist die Sendeeinrichtung einen ersten Beschleunigungssensors 120 und einen zweiten Beschleunigungssensors 122 auf. Der erste Beschleunigungssensor 120 ist ausgebildet, um eine Beschleunigung der ersten Linse 108 zu erfassen und einen der Beschleunigung entsprechenden ersten Beschleunigungswert bereitzustellen. Der zweite Beschleunigungssensor 122 ist ausgebildet, um eine Beschleunigung der zweiten Linse 110 zu erfassen und einen der Beschleunigung entsprechenden zweiten Beschleunigungswert bereitzustellen. In diesem Fall ist die Verstelleinrichtung 114 beispielsweise ausgebildet, um die Beschleunigungswerte zu verwenden, um die Bewegungen der Linsen 108, 110 aufeinander abzustimmen.

Gemäß diesem Ausführungsbeispiel ist die erste Linse 108 von einer ersten Halterung aufgenommen. Die erste Linse 108 und die erste Halterung bilden zusammen eine erste Linseneinheit 124. In diesem Fall wird beim Bewegen der ersten Linse 108 nicht nur die erste Linse 108 sondern die gesamte erste Linseneinheit 124 bewegt. Zusätzlich oder alternativ zu der ersten Halterung kann die erste Linseneinheit 124 ein oder mehrere andere Elemente umfassen. Bei der Bewegung der ersten Linse 108 in die erste Richtung 116 setzt sich ein entsprechender erster Impuls aus der Masse und der Geschwindigkeit der ersten Linseneinheit 124 in die erste Richtung 116 zusammen.

Entsprechend ist die zweite Linse 110 gemäß diesem Ausführungsbeispiel von einer zweiten Halterung aufgenommen. Die zweite Linse 110 und die zweite Halterung bilden zusammen eine zweite Linseneinheit 126. In diesem Fall wird beim Bewegen der zweiten Linse 110 nicht nur die zweite Linse 110 sondern die gesamte zweite Linseneinheit 126 bewegt. Zusätzlich oder alternativ zu der zweiten Halterung kann die zweite Linseneinheit 126 ein oder mehrere andere Elemente umfassen. Bei der Bewegung der zweiten Linse 110 in die zweite Richtung 118 setzt sich ein entsprechender zweiter Impuls aus der Masse und der Geschwindigkeit der zweiten Linseneinheit 126 in die zweite Richtung 118 zusammen.

Wenn keine Halterungen oder ähnliches für die Linsen 108, 110 vorgesehen sind, so können die Linseneinheiten 124, 126 als Synonym für die Linsen 108, 110 angesehen werden.

Gemäß der Erfindung ist die Vorrichtung 112 ausgebildet, um die Bewegungen der Linseneinheiten 124, 126 während eines Verstellvorgangs so zu bewirken, dass daraus resultierende Impulsänderungen einander entgegengesetzt sind.

Erfindungsgemäß ist die Verstelleinrichtung 114 ausgebildet ist, um während des Verstellvorgangs einen ersten Impulsübertrag an die erste Linseneinheit 124 bereitzustellen, durch den die erste Linseneinheit 124 in die erste Richtung 116 bewegt wird, und einen zweiten Impulsübertrag an die zweite Linseneinheit 126 bereitzustellen, durch den die zweite Linseneinheit 126 in die zweite Richtung 118 bewegt wird. Dabei weisen der erste Impulsübertrag und der zweite Impulsübertrag den gleichen Betrag auf.

Gemäß einem Ausführungsbeispiel ist die Vorrichtung 112 ausgebildet, um die Bewegungen der Linseneinheiten 124, 126 während eines Verstellvorgangs gleichzeitig durchzuführen. Dazu wird die erste Linseneinheit 124 während einer ersten Zeitdauer um eine erste Wegstrecke in die erste Richtung 116 bewegt und die zweite Linseneinheit 126 wird während einer zweiten Zeitdauer um eine zweite Wegstrecke in die zweite Richtung 118 bewegt. Dabei starten beide Zeitdauern zum gleichen Zeitpunkt und dauern gleich lang. Auf diese Weise Linseneinheit 124, 126 immer gleichzeitig in Bewegung. Je nach Ausgestaltung der Linsen 108, 110 oder der Linseneinheiten 124, 126 können die dabei zurückgelegten Wegstrecken der beiden Linseneinheit 124, 126 gleich lang oder unterschiedlich lang sein.

Wenn die Linseneinheiten 124, 126 gleich schwer sind, ist die Vorrichtung 112 gemäß einem Ausführungsbeispiel ausgebildet, um die Linseneinheiten 124, 126 während des Verstellvorgangs um gleich lange Wegstrecken zu bewegen. Wenn die Linseneinheiten 124, 126 dagegen ein unterschiedliches Gewicht aufweisen, ist die Vorrichtung 112 gemäß einem Ausführungsbeispiel ausgebildet, um die Linseneinheiten 124, 126 während eines Verstellvorgangs um unterschiedlich lange Wegstrecken zu bewegen. Auf diese Weise können die Impulse der Linseneinheit 124, 126 trotz des unterschiedlichen Gewichts während des Verstellvorgangs betragsmäßig gleich gehalten werden.

Gemäß einem Ausführungsbeispiel ist die Verstelleinrichtung 114 dabei dazu ausgebildet, um während des Verstellvorgangs durchgängig eine erste Kraft auf die erste Linseneinheit 124 und eine der ersten Kraft betragsmäßig entsprechende zweite Kraft auf die zweite Linseneinheit 126 auszuüben. Dabei kann eine betragsmäßige Größe der Kräfte während des Verstellvorgangs variieren.

Gemäß einem Ausführungsbeispiel weist die Vorrichtung 112 eine Eingangsschnittstelle zum Empfangen eines Fokussiersignals 128 auf. Das Fokussiersignal 128 wird beispielsweise von einem Anwender oder einer Sensorik bereitgestellt und zeigt eine erforderliche Änderung der Fokussierung des Laserstrahls 102 an. Gemäß einem Ausführungsbeispiel ist die Verstelleinrichtung 114 ausgebildet, um den Abstand zwischen den Linsen 108, 110 unter Verwendung des Fokussiersignals 128 einzustellen. Beispielsweise kann das Fokussiersignal 128 direkt zum Ansteuern zumindest eines Aktors zum Bewegen der Linseneinheiten 124, 126 der Verstelleinrichtung 114 verwendet werden. Wenn die Verstelleinrichtung 114 eine Steuereinrichtung und zumindest einen Aktor aufweist, kann das Fokussiersignal 128 zum Bestimmen zumindest eines Steuersignals zum Ansteuern des zumindest einen Aktors verwendet werden. Eine solche Steuereinrichtung ist beispielsweise ausgebildet, um das zumindest eine Steuersignal unter Verwendung einer vorbestimmten Steuervorschrift zu bestimmen und an den zumindest einen Aktor bereitzustellen. Als Aktor kann beispielsweise ein Antrieb oder ein verformbares Verstellelement eingesetzt werden.

Gemäß einem Ausführungsbeispiel sind die Linseneinheiten 124, 126 Teil eines Strahlaufweiters, auch Beam Expander genannt, zum Vergrößern oder Verkleinern eines Laserstrahldurchmessers. Dadurch ermöglichen sie, verschiedene Elemente eines optischen Systems aufeinander anzupassen. So kann beispielsweise der Laserstrahldurchmesser am Ausgang des Lasers 106 an einen benötigten Durchmesser am Eingang eines Objektivs 129 angepasst werden. Solche Strahlaufweiter kommen vor allem in der Lasermaterialbearbeitung zum Einsatz.

Gemäß einem Ausführungsbeispiel stellt die Vorrichtung 112 einen kompakten, schnellen, schwingungsarmen z-Versteller mit großer optischer Wirkung dar. Dies wird durch die Vorrichtung 112 und ein zugehöriges Verfahren gelöst, bei dem die Fokussier- oder Vergrößerungsbewegungen mit Hilfe eines Aktors mit mindestens zwei Linsen 108, 110 erfolgen.

Die Beschleunigungskraft auf die erste Linse 108, wird durch die gegensinnige Bewegung der zweiten Linse 110 kompensiert. Die beiden Linsen 108, 110 können exakt gleich sein. In diesem Fall können die Linsen 108, 110 die gleiche Brechkraft und gleiche mechanische Ausführung, beispielsweis in Bezug auf Geometrie und Material aufweisen. Dann tilgen sie die äußeren Kräfte ideal bei gegensinnig gleichen Bewegungsabläufen. Die Linsen 108, 110 können aber auch verschieden sein. Dann wird gemäß einem Ausführungsbeispiel eine Beschleunigung-Symmetrie erreicht, indem die Massen der bewegten Teile beispielsweise über die Fassungen und/oder Führungsbauteile der Linseneinheiten 124, 126 ausgeglichen werden.

Gemäß einem Ausführungsbeispiel werden die beim Bewegen der Linsen 108, 110 wirkenden Antriebskräfte symmetriert, indem unterschiedliche Beschleunigungen verwendet werden, d.h. das leichtere Bauteil, also beispielsweise die leichtere der Linseneinheiten 124, 126, fährt einen längeren Weg in derselben Zeit. Beispielsweise weist die Verstelleinrichtung 114 dazu eine geeignete Steuerung und Antriebe auf, wobei die Steuerung der Antriebe einen entsprechenden Beitrag leistet, entweder kalibriert als Steuerung oder geregelt mit Sensoren 120, 122 zur Beschleunigungsmessung. Dabei wird zunächst davon ausgegangen, dass die Stellwege beider Linsen 108, 110 gleich groß sind. Bei einer idealen Symmetrie gilt für die beim Verstellvorgang zurückgelegten Wegestrecken s1 und s2 der Linsen 108, 110: s2 = -s1. Alternativ können die Stellwege proportional zueinander sein. Dann gilt: s2 = k*(-s1). Wenn die Stellwege nichtlinear verbunden sind gilt: s2 = k*s1+l*s1²+m*s2³+.... Mit einer geeigneten Steuerung kann auch dieser Fall gelöst werden, indem geeignete Weg-ZeitVerläufe bedient werden, wobei für die auf die Linseneinheiten 124, 126 wirkende Antriebskraft gilt: F1 = -F2.

Durch die Achse mit entsprechendem optischen Setup wird die Geschwindigkeit der Verstellung des Fokus im Vergleich zu nur einer bewegbaren Linse verdoppelt. Durch die gegenläufigen Kräfte wird die resultierende Kraft getilgt. Das gegenläufige Bauteil, beispielsweise die zweite Linseneinheit 126, trägt zur Vergrößerung der optischen Wirkung der Anordnung bei. Die Maschine, also die Vorrichtung 112 oder das Gerät 100, oder eine nachfolgende Optik brauchen keine besonderen Konstruktions- oder Dämpfungsmaßnahmen. Zusätzlich oder alternativ können ein Trägheitsdämpfer, eine Gegenmasse oder ein Schwingungstilger eingesetzt werden, um durch die Bewegungen der Linsen 108, 110 hervorgerufene Störeffekt zu mindern. Solche Maßnahmen, die ungenauer und zu weniger guten Ergebnissen wie die gegenläufige Bewegung der Linsen 108, 110 führen, können jedoch zur Unterstützung beitragen.

Typische Applikationen für das Gerät 100 sind Bohren, Schneiden, Schweißen, Laser-Tiefgravur, Rapid Prototyping, Rapid Tooling, Mikrostrukturierung und 3D-WerkstückBearbeitung.

Fig. 2 zeigt zwei Linsen 108, 110 für ein Gerät zur Lasermaterialbearbeitung gemäß einem Ausführungsbeispiel. Dabei kann es sich um ein Ausführungsbeispiel der anhand von Fig. 1 beschriebenen Linsen handeln. Es ist ein Strahlengang des Laserstrahls 102 durch die Linsen 108, 110 gezeigt. Das gezeigte optische Prinzip ist symmetrisch mit zwei Linsen 108, 110. Dazu sind die Linsen 108, 110 gemäß einem Ausführungsbeispiel identisch ausgeführt. In diesem Fall können die Linsen 108, 110 während eines Verstellvorgangs so bewegt werden, dass sie gleichzeitig betragsmäßig gleiche jedoch entgegen gerichtete Wegstrecken zurücklegen.

Fig. 3 zeigt zwei Linsen 108, 110 für ein Gerät zur Lasermaterialbearbeitung gemäß einem Ausführungsbeispiel. Dabei kann es sich um ein Ausführungsbeispiel der anhand von Fig. 1 beschriebenen Linsen handeln. Es ist ein Strahlengang des Laserstrahls 102 durch die Linsen 108, 110 gezeigt. Das gezeigte optische Prinzip ist unsymmetrisch mit zwei Linsen 108, 110. Dazu sind die Linsen 108, 110 gemäß einem Ausführungsbeispiel unterschiedlich ausgeführt. Insbesondere wenn die Linsen 108, 110 unterschiedliche Massen aufweisen, können die Linsen 108, 110 während eines Verstellvorgangs so bewegt werden, dass sie gleichzeitig betragsmäßig unterschiedliche und entgegen gerichtete Wegstrecken zurücklegen.

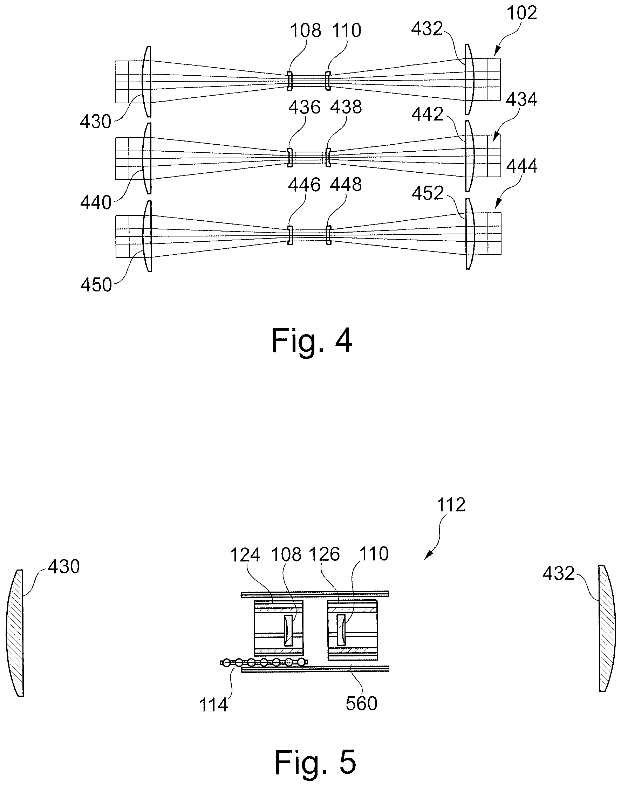

Fig. 4 zeigt eine Linsenanordnung für ein Gerät zur Lasermaterialbearbeitung gemäß einem Ausführungsbeispiel. Dabei kann es sich um ein Ausführungsbeispiel des anhand von Fig. 1 beschriebenen Geräts handeln. Es ist ein Strahlengang des Laserstrahls 102 durch die Linsen 108, 110 gezeigt. Dabei sind die Linsen 108, 110 zwischen zwei weiteren Linsen 430, 432 angeordnet. Der Laserstrahl 102 weist eine erste Strahlcharakteristik auf, beispielsweise eine blaue Farbe. Das gezeigte optische Prinzip ist symmetrisch mit vier Linsen 108, 110, 430, 432. Die äußeren Linsen 430, 432 können zusammen mit den Linsen 108, 110 bewegbar oder fix sein.

Optional weist die Linsenanordnung für einen zweiten Laserstrahl 434, der eine zweite Strahlcharakteristik aufweist, beispielsweise eine grüne Farbe, weitere Linsen 436, 438, 440, 442 auf, die entsprechend zu den Linsen 108, 110, 430, 432 ausgeführt sein können.

Optional weist die Linsenanordnung für einen dritten Laserstrahl 444 der eine dritte Strahlcharakteristik aufweist, beispielsweise eine rote Farbe, weitere Linsen 446, 448, 450, 452 auf, die entsprechend zu den Linsen 108, 110, 430, 432 ausgeführt sein können.

Gemäß einem Ausführungsbeispiel symbolisieren die drei gezeigten Linsenanordnungen verschiedene Strahlgänge. Die im Zusammenhang mit dem ersten Laserstrahl 102 gezeigte Linsenanordnung zeigt eine Ausgangsposition der Linsen 108, 110, die auch als "0"-Position bezeichnet wird. Die im Zusammenhang mit dem zweiten Laserstrahl 434 gezeigte Linsenanordnung zeigt eine Auslenkung, die zu einer Verschiebung der Fokussierung in positiver Richtung - entlang der z-Achse - führt. Die im Zusammenhang mit dem dritten Laserstrahl 444 gezeigte Linsenanordnung zeigt eine Verschiebung in negativer Richtung. Gemäß diesem Ausführungsbeispiel führt das Gerät nur zu einem kollimierten, konvergenten und divergenten Strahl - durch eine weitere Linse (nicht in Fig. 4 gezeigt) führt dies zu einer Fokusverschiebung.

Dieser Effekt wird durch die kleinen Linsen 108, 110, 436, 438, 446, 448 erreicht. Gemäß diesem Ausführungsbeispiel ist ein Abstand der Linsen 436, 438 größer als ein Abstand der Linsen 108, 110 und ein Abstand der Linsen 446, 448 ist kleiner als ein Abstand der Linsen 108, 110.

Gemäß einem alternativen Ausführungsbeispiel werden zur Erzielung dieses Effekts die die Krümmungen der Linsen 436, 438, 446, 448 gegenüber den Krümmungen der Linsen 108, 110 ein bisschen geändert, um die Wellenlänge zu kompensieren.

Fig. 5 zeigt eine Vorrichtung 112 zur Fokusverstellung für ein Gerät zur Lasermaterialbearbeitung gemäß einem Ausführungsbeispiel. Dabei kann es sich um ein Ausführungsbeispiel des anhand von Fig. 1 beschriebenen Geräts handeln, dass ein vollsymmetrisches optisches System mit zwei beweglichen Linsen 108, 110 und zwei festen Linsen 430, 432 aufweist. Die Linsen 108, 110, 430, 432 können beispielsweise zum Formen des in Fig. 1 gezeigten Laserstrahls eingesetzt werden.

Gemäß einem Ausführungsbeispiel sind die Linsen 108, 110 in zwei bewegbaren Linseneinheiten 124, 126 angeordnet. Die Vorrichtung 112 weist eine Verstelleinrichtung 114 auf, die verwendet wird, um die innerhalb eines Gehäuses 560 geführten Linseneinheiten 124, 126 zu bewegen.

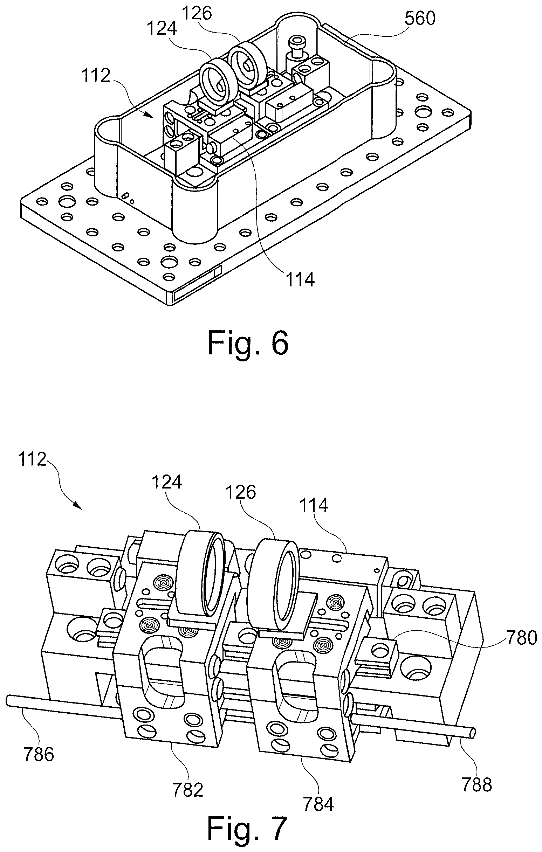

Fig. 6 zeigt eine Vorrichtung 112 zur Fokusverstellung gemäß einem Ausführungsbeispiel. Die Vorrichtung 112 ist in einem auf einer Grundplatte angeordneten Gehäuse 560 angeordnet. Die Vorrichtung 112 weist zum Bewegen von zwei Linseneinheiten 125, 126 eine Verstelleinrichtung 114 auf, wie sie anhand der vorangegangenen Figuren beschrieben ist. Die Vorrichtung 112 ist dabei als ein Strahlaufweiter realisiert, der auch als Beam Expander (BEX) bezeichnet wird.

Fig. 7 zeigt eine Vorrichtung 112 zur Fokusverstellung gemäß einem Ausführungsbeispiel. Dabei handelt es sich um eine Detailansicht der anhand von Fig. 6 beschriebenen Vorrichtung. Gezeigt sind die zwei Linseneinheiten 124, 126 sowie eine Verstelleinrichtung 114. Die Verstelleinrichtung 114 umfasst eine Linearführung 780 mit einem ersten Schlitten 782 und einem zweiten Schlitten 784. Die erste Linseneinheiten 124 ist auf dem ersten Schlitten 782 und die zweite Linseneinheiten 126 ist auf dem zweiten Schlitten 784 montiert.

Je Schlitten 782, 784 ist ein Linearantrieb und ein Wegmesssystem vorhanden. Von einem ersten Linearantrieb zum Bewegen des ersten Schlittens 782 ist in Fig. 7 nur eine erste Welle 786 und einem zweiten Linearantrieb zum Bewegen des zweiten Schlittens 784 ist in Fig. 7 nur eine zweite Welle 788 gezeigt.

Gemäß einem Ausführungsbeispiel wird als Antrieb ein Rotationsmotor eingesetzt, der Statorwicklungen und einen als Permanentmagnet ausgeführten Rotor aufweist. Der Antrieb sorgt für Geschwindigkeit und Beschleunigung.

Gemäß einem Ausführungsbeispiel wird als Linearführung 780 eine Führung eingesetzt, ei für einen geraden und präzisen Ablauf sorgt und verschleißfrei ist. Die Linearführung 780 kann dabei eine Schiene aufweisen, über die die Schlitten 782, 784 geführt werden. Alternativ kann eine Linearführung mittels Festkörpergelenk eingesetzt werden.

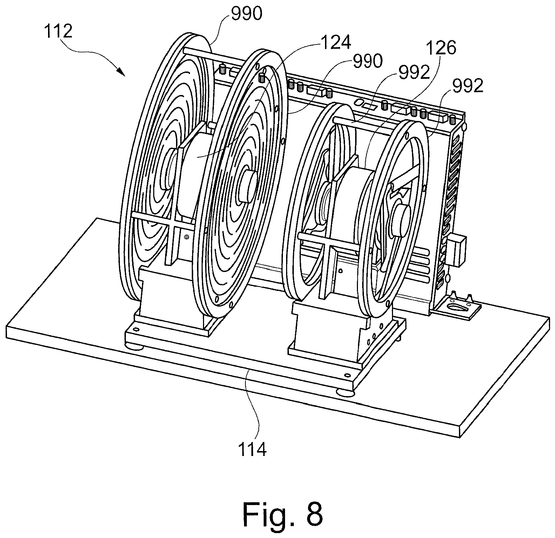

Fig. 8 zeigt eine Vorrichtung 112 zur Fokusverstellung gemäß einem Ausführungsbeispiel. Dabei kann es sich um ein Ausführungsbeispiel der anhand von Fig. 1 beschriebenen Vorrichtung handeln. Gezeigt sind zwei Linseneinheiten 124, 126 und eine Verstelleinrichtung 114. Linearbewegungen der Linseneinheiten 124, 126 werden unter Verwendung von ersten Festkörpergelenken 990 und zweiten Festkörpergelenken 992 ermöglicht.

Zwei erste Festkörpergelenke 990 sind scheibenförmig ausgeführt und parallel zueinander angeordnet, wobei die erste Linseneinheit 124 zwischen den zwei Festkörpergelenken 990 angeordnet und von den Festkörpergelenken 990 gehalten wird.

Zwei zweite Festkörpergelenke 992 sind scheibenförmig ausgeführt und parallel zueinander angeordnet, wobei die zweite Linseneinheit 126 zwischen den zwei Festkörpergelenken 992 angeordnet und von den Festkörpergelenken 990 gehalten wird.

Je nach Standpunkt können die Festkörpergelenke 990, 992 als Bestandteil der Linseneinheiten 124, 126, als Bestandteil der Verstelleinrichtung 114 oder teilweise als Bestandteil der Linseneinheiten 124, 126, und teilweise als Bestandteil der Verstelleinrichtung 114 angesehen werden. So können zum Halten einer Linse verwendete Fassungen der Festkörpergelenke 990, 992 als Bestandteile der Linseneinheiten 124, 126 und Befestigungsringe zum Befestigen der Festkörpergelenke 990, 992 an einem Gehäuse oder Trägerelement als Bestandteile der Verstelleinrichtung 114 angesehen werden.

Gemäß dem gezeigten Ausführungsbeispiel unterscheiden sich die ersten Festkörpergelenke 990 von den zweiten Festkörpergelenken 992. Beispielsweise ermöglichen die ersten Festkörpergelenke 990 während eines Verstellvorgangs eine Bewegung der ersten Linseneinheit 124 um eine erste Wegstrecke und die zweiten Festkörpergelenken 992 eine Bewegung der zweiten Linseneinheit 126 um eine zweite Wegstrecke, die sich von der ersten Wegstrecke unterscheidet.

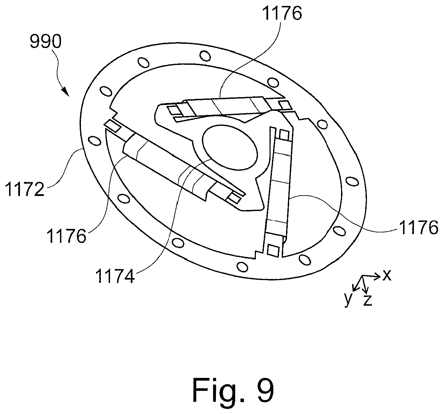

Fig. 9 zeigt ein Festkörpergelenk 990 zur Festkörperführung gemäß einem Ausführungsbeispiel. Das Festkörpergelenk 990 weist einen Befestigungsring 1172, eine Fassung 1174 und Führungsbauteile 1176 auf. Von der Fassung 1174 kann als Festkörper eine Linse aufgenommen werden, beispielsweise die anhand von Fig. 1 gezeigte erste Linse 108. Die Führungsbauteile sind ausgeformt, um die Fassung 1174 mit dem Befestigungsring 1172 zu koppeln. Somit können die Fassung 1174 und optional die Führungsbauteile 1176 als Teile einer Linseneinheit aufgefasst werden, wie sie anhand von Fig. 1 beschrieben ist.

Die Führungsbauteile 1176 sind als drei verformbare Stege ausgeführt. Wenn die Stege verformt werden, beispielsweise unter Verwendung einer Verstelleinrichtung, wie sie anhand von Fig. 1 beschrieben ist, so führt die Fassung 1174 eine Linearbewegung entlang einer Mittelachse des Festkörpergelenks 990 aus. Beispielsweise kann durch eine Verformung des Festkörpergelenks 990 eine Bewegung der Fassung 1174 um maximal 4 mm realisiert werden. Ein Durchmesser des Festkörpergelenks 990 beträgt beispielsweise in etwa 15 Zentimeter.

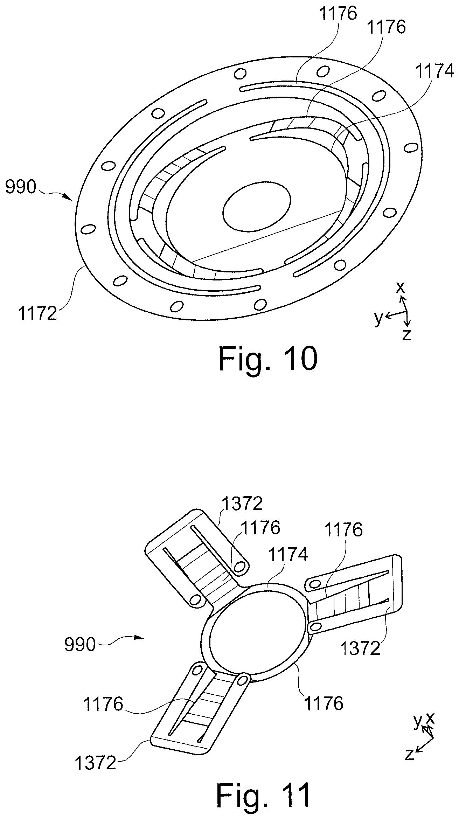

Wenn das Festkörpergelenk 990 nicht verformt ist, liegen der Befestigungsring 1172 und die Fassung 1174 in einer Ebene. In der in Fig. 11 gezeigten maximalen Gesamtverformung liegen der Befestigungsring 1172 und die Fassung 1174 in beabstandeten parallelen Ebenen.

Fig. 10 zeigt ein Festkörpergelenk 990 zur Festkörperführung gemäß einem Ausführungsbeispiel. Das Festkörpergelenk 990 weist entsprechend zu dem anhand von Fig. 9 beschriebenen Ausführungsbeispiel einen Befestigungsring 1172, eine Fassung 1174 und Führungsbauteile 1176 auf. Im Unterschied zu Fig. 9 sind die Führungsbauteile 1176 als ein äußerer Ring und ein innerer Ring ausgeformt, die zwischen dem ringförmigen Befestigungsring 1172 und der ringförmigen Fassung 1174 angeordnet sind. Der äußere ring der Führungsbauteils 1176 ist über zwei einander gegenüberliegende Stege mit dem Befestigungsring 1172 und über zwei weitere Stege mit dem innerer Ring verbunden. Der innere Ring der Führungsbauteils 1176 ist über zwei einander gegenüberliegende Stege mit der Fassung 1174 verbunden.

Fig. 11 zeigt ein Festkörpergelenk 990 zur Festkörperführung gemäß einem Ausführungsbeispiel. Das Festkörpergelenk 990 weist entsprechend zu dem anhand von Fig. 9 beschriebenen Ausführungsbeispiel eine Fassung 1174 und Führungsbauteile 1176 auf. Im Unterschied zu Fig. 9 sind anstelle des Befestigungsrings drei Befestigungselemente 1372 vorgesehen. Dabei ist jedes der Befestigungselemente 1372 über ein als geradliniger Steg ausgeformtes Führungsbauteil 1176 mit der Fassung 1174 verbunden.

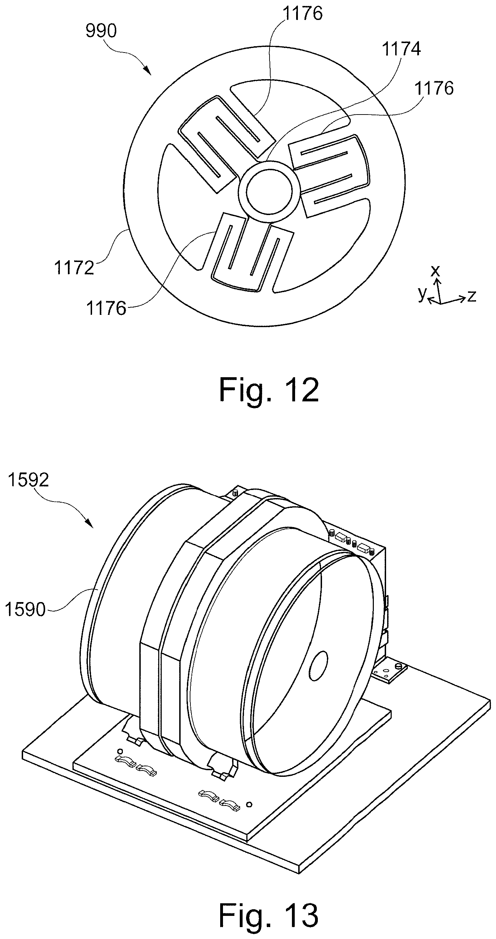

Fig. 12 zeigt ein Festkörpergelenk 990 zur Festkörperführung gemäß einem Ausführungsbeispiel. Das Festkörpergelenk 990 weist entsprechend zu dem anhand von Fig. 9 beschriebenen Ausführungsbeispiel einen Befestigungsring 1172, eine Fassung 1174 und Führungsbauteile 1176 auf. Im Unterschied zu Fig. 9 sind die Führungsbauteile 1176 nicht als geradlinige sondern als mäandernde Stege ausgeformt.

Fig. 13 zeigt eine Außenansicht eines Gehäuses 1590 für eine Linearführung 1592 mittels Festkörpergelenk gemäß einem Ausführungsbeispiel.

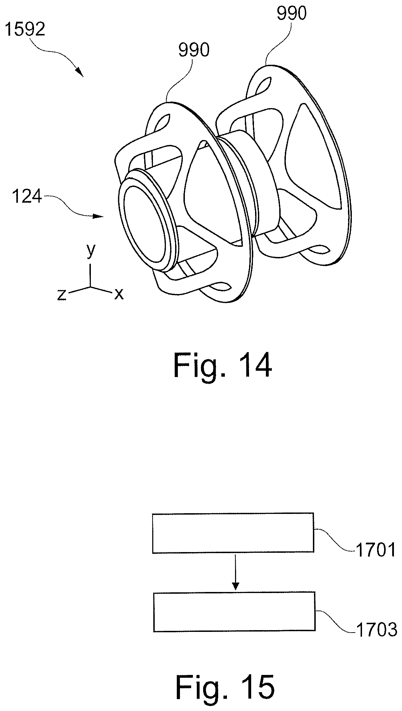

Fig. 14 zeigt eine Linearführung 1592 mittels Festkörpergelenk gemäß einem Ausführungsbeispiel. Die Linearführung 1592 kann eingesetzt werden, um eine Linearbewegung einer Linseneinheit 124 zu ermöglichen. Dabei kann es sich um die in Fig.1 beschriebene erste Linseneinheit handeln. Für die in Fig. 1 gezeigte zweite Linseneinheit kann eine entsprechende weitere Linearführung eingesetzt werden.

Gemäß diesem Ausführungsbeispiel werden für die Linearführung 1592 zwei parallel angeordnete Festkörpergelenke 990 verwendet, wie sie anhand der vorangegangenen Figuren beschrieben sind.

Fig. 15 ein Ablaufdiagramm eines Verfahrens zur Lasermaterialbearbeitung gemäß einem Ausführungsbeispiel. Das Verfahren kann im Zusammenhang mit einer Vorrichtung zur Fokusverstellung ausgeführt werden, wie sie anhand der vorangegangenen Figuren beschrieben ist.

In einem Schritt 1701 wird ein Laserstrahl bereitgestellt, der zumindest durch eine erste Linse und eine zweite Linse geleitet wird. Durch einen Abstand der Linsen wird ein Fokus des Laserstrahls eingestellt. In einem Schritt 1703 wird die erste Linse in eine erste Richtung und die zweite Linse in eine der ersten Richtung entgegengesetzte zweite Richtung bewegt, um den Abstand zwischen der ersten Linse und der zweiten Linse für die Fokusverstellung zu verstellen. Der Schritt 1703 kann auch vor dem Schritt 1701 ausgeführt werden. Der Schritt 1703 kann wiederholt ausgeführt werden, um den Laserstrahl nachzufokussieren.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Vorrichtung (112) zur Fokusverstellung für ein Gerät (100) zur Lasermaterialbearbeitung, das eine bewegbar angeordnete erste Linseneinheit (124), die eine erste Linse (108) umfasst, und eine bewegbar angeordnete zweite Linseneinheit (126), die eine zweite Linse (110) umfasst, aufweist, wobei die Vorrichtung (112) das folgende Merkmal aufweist:
eine Verstelleinrichtung (114), die ausgebildet ist, um die erste Linseneinheit (124) in eine erste Richtung (116) und die zweite Linseneinheit (126) in eine der ersten Richtung (116) entgegengesetzte zweite Richtung (118) zu bewegen, um einen Abstand zwischen der ersten Linse (108) und der zweiten Linse (110) für die Fokusverstellung zu verstellen, wobei die Verstelleinrichtung (114) ausgebildet ist, um einen ersten Impulsübertrag an die erste Linseneinheit (124) bereitzustellen, um die erste Linse (108) in die erste Richtung (116) zu bewegen, und einen zweiten Impulsübertrag an die zweite Linseneinheit (126) bereitzustellen, um die zweite Linse (110) in die zweite Richtung (118) zu bewegen, **dadurch gekennzeichnet, dass** der erste Impulsübertrag und der zweite Impulsübertrag betragsmäßig gleich sind.

2. Vorrichtung (112) gemäß Anspruch 1, bei der die Verstelleinrichtung (114) ausgebildet ist, um die erste Linseneinheit (124) um eine erste Wegstrecke und die zweite Linseneinheit (126) um eine zweite Wegstrecke zu bewegen, wobei die erste Wegstrecke und die zweite Wegstrecke betragsmäßig gleich sind.

3. Vorrichtung (112) gemäß Anspruch 1, bei der die Verstelleinrichtung (114) ausgebildet ist, um die erste Linseneinheit (124) um eine erste Wegstrecke und die zweite Linseneinheit (126) um eine zweite Wegstrecke zu bewegen, wobei die erste Wegstrecke und die zweite Wegstrecke betragsmäßig unterschiedlich sind.

4. Vorrichtung (112) gemäß einem der vorangegangenen Ansprüche, bei der die Verstelleinrichtung (114) ausgebildet ist, um die erste Linseneinheit (124) während einer ersten Zeitdauer und die zweite Linseneinheit (126) während einer zweiten Zeitdauer zu bewegen, wobei die erste Zeitdauer und die zweite Zeitdauer zum selben Zeitpunkt starten und betragsmäßig gleich sind.

5. Vorrichtung (112) gemäß Anspruch 4, bei der die Verstelleinrichtung (114) ausgebildet ist, um während der ersten Zeitdauer eine erste Kraft auf die erste Linseneinheit (124) und während der zweiten Zeitdauer eine zweite Kraft auf die zweite Linseneinheit (126) auszuüben, wobei die erste Kraft und die zweite Kraft einander entgegengerichtet und betragsmäßig gleich sind.

6. Vorrichtung (112) gemäß einem der vorangegangenen Ansprüche, mit einer Sensoreinrichtung (120, 122) zum Erfassen eines ersten Beschleunigungswerts, der eine Beschleunigung der ersten Linseneinheit (124) repräsentiert, und zum Erfassen eines zweiten Beschleunigungswerts, der eine Beschleunigung der zweiten Linseneinheit (126) repräsentiert, wobei die Verstelleinrichtung (114) ausgebildet ist, die erste Linseneinheit (124) und die zweite Linseneinheit (126) unter Verwendung des ersten Beschleunigungswerts und des zweiten Beschleunigungswerts zu bewegen.

7. Vorrichtung (112) gemäß einem der vorangegangenen Ansprüche, mit zwei ersten Festkörpergelenken (990) zum beweglichen Lagern der erste Linseneinheit (124) und zwei zweiten Festkörpergelenken (992) zum beweglichen Lagern der zweiten Linseneinheit (126).

8. Gerät (100) zur Materialbearbeitung, mit folgenden Merkmalen:
einer Bereitstellungseinrichtung, insbesondere einem Laser (106), zum Bereitstellen eines Strahls (102);
eine bewegbar angeordnete erste Linseneinheit (124), die eine erste Linse (108) umfasst, und eine bewegbar angeordnete zweite Linseneinheit (126), die eine zweite Linse (110) umfasst, wobei ein Strahlengang des Strahls (102) durch die erste Linse (108) und die zweite Linse (110) geführt ist; und
eine Vorrichtung (112) gemäß einem der vorangegangenen Ansprüche zur Fokusverstellung des Geräts (100).

9. Verfahren zur Fokusverstellung für ein Gerät (100) zur Materialbearbeitung, das eine bewegbar angeordnete erste Linseneinheit (124), die eine erste Linse (108) umfasst, und eine bewegbar angeordnete zweite Linseneinheit (126), die eine zweite Linse (110) umfasst, aufweist, wobei das Verfahren den folgenden Schritt umfasst:
Bewegen (1701) der ersten Linseneinheit (124) in eine erste Richtung (116) und der zweiten Linseneinheit (126) in eine der ersten Richtung (116) entgegengesetzten zweiten Richtung (118), um einen Abstand zwischen der ersten Linse (108) und der zweiten Linse (110) für die Fokusverstellung zu verstellen,
**dadurch gekennzeichnet, dass** die Verstelleinrichtung (114) ausgebildet ist, um einen ersten Impulsübertrag an die erste Linseneinheit (124) bereitzustellen, um die erste Linse (108) in die erste Richtung (116) zu bewegen, und einen zweiten Impulsübertrag an die zweite Linseneinheit (126) bereitzustellen, um die zweite Linse (110) in die zweite Richtung (118) zu bewegen, **dadurch gekennzeichnet, dass** der erste Impulsübertrag und der zweite Impulsübertrag betragsmäßig gleich sind.

## Claims

1. Apparatus (112) for focus adjustment for a device (100) for laser material processing, which has a movably arranged first lens unit (124), which comprises a first lens (108), and a movably arranged second lens unit (126), which comprises a second lens (110), wherein the apparatus (112) has the following feature:
an adjustment device (114), which is designed to move the first lens unit (124) in a first direction (116) and to move the second lens unit (126) in a second direction (118) opposite to the first direction (116) in order to adjust a distance between the first lens (108) and the second lens (110) for the focus adjustment, wherein the adjustment device (114) is designed to provide a first momentum transfer to the first lens unit (124) in order to move the first lens (108) in the first direction (116) and to provide a second momentum transfer to the second lens unit (126) in order to move the second lens (110) in the second direction (118), **characterized in that** the first momentum transfer and the second momentum transfer are equal in terms of absolute value.

2. Apparatus (112) according to Claim 1, wherein the adjustment device (114) is designed to move the first lens unit (124) by a first path distance and to move the second lens unit (126) by a second path distance, wherein the first path distance and the second path distance are equal in terms of absolute value.

3. Apparatus (112) according to Claim 1, wherein the adjustment device (114) is designed to move the first lens unit (124) by a first path distance and to move the second lens unit (126) by a second path distance, wherein the first path distance and the second path distance are different in terms of absolute value.

4. Apparatus (112) according to any of the preceding claims, wherein the adjustment device (114) is designed to move the first lens unit (124) during a first time period and to move the second lens unit (126) during a second time period, wherein the first time period and the second time period start at the same point in time and are equal in terms of absolute value.

5. Apparatus (112) according to Claim 4, wherein the adjustment device (114) is designed to exert a first force on the first lens unit (124) during the first time period and to exert a second force on the second lens unit (126) during the second time period, wherein the first force and the second force are directed opposite to each other and are equal in terms of absolute value.

6. Apparatus (112) according to any of the preceding claims, having a sensor device (120, 122) for measuring a first acceleration value, which represents an acceleration of the first lens unit (124), and for measuring a second acceleration value, which represents an acceleration of the second lens unit (126), wherein the adjustment device (114) is designed to move the first lens unit (124) and the second lens unit (126) using the first acceleration value and the second acceleration value.

7. Apparatus (112) according to any of the preceding claims, having two first flexure hinges (990) for movably mounting the first lens unit (124) and two second flexure hinges (992) for movably mounting the second lens unit (126) .

8. Device (100) for material processing, having the following features:
a providing device, in particular a laser (106), for providing a beam (102);
a movably arranged first lens unit (124), which comprises a first lens (108), and a movably arranged second lens unit (126), which comprises a second lens (110), wherein a beam path of the beam (102) is guided through the first lens (108) and the second lens (110); and
an apparatus (112) according to any of the preceding claims for adjusting the focus of the device (100).

9. Method for focus adjustment for a device (100) for material processing, which has a movably arranged first lens unit (124), which comprises a first lens (108), and a movably arranged second lens unit (126), which comprises a second lens (110), wherein the method comprises the following step:
moving (1701) the first lens unit (124) in a first direction (116) and moving the second lens unit (126) in a second direction (118) opposite to the first direction (116) in order to adjust a distance between the first lens (108) and the second lens (110) for the focus adjustment, **characterized in that** the adjustment device (114) is designed to provide a first momentum transfer to the first lens unit (124) in order to move the first lens (108) in the first direction (116) and to provide a second momentum transfer to the second lens unit (126) in order to move the second lens (110) in the second direction (118), **characterized in that** the first momentum transfer and the second momentum transfer are equal in terms of absolute value.

## Revendications

1. Dispositif (112) permettant d'ajuster la mise au point pour un appareil (100) servant à l'usinage de matériau au laser, qui présente une première unité de lentille (124) disposée de manière mobile qui comprend une première lentille (108) et une deuxième unité de lentille (126) disposée de manière mobile qui comprend une deuxième lentille (110), le dispositif (112) présentant la particularité suivante :
un moyen d'ajustement (114) qui est réalisé pour déplacer la première unité de lentille (124) dans une première direction (116) et pour déplacer la deuxième unité de lentille (126) dans une deuxième direction (118) opposée à la première direction (116) afin d'ajuster une distance entre la première lentille (108) et la deuxième lentille (110) pour l'ajustement de la mise au point, dans lequel le moyen d'ajustement (114) est réalisé pour fournir un premier report d'impulsion à la première unité de lentille (124) pour déplacer la première lentille (108) dans la première direction (116), et pour fournir un deuxième report d'impulsion à la deuxième unité de lentille (126) pour déplacer la deuxième lentille (110) dans la deuxième direction (118), **caractérisé en ce que** le premier report d'impulsion et le deuxième report d'impulsion sont de grandeur identique.

2. Dispositif (112) selon la revendication 1, dans lequel le moyen d'ajustement (114) est réalisé pour déplacer la première unité de lentille (124) sur un premier trajet et pour déplacer la deuxième unité de lentille (126) sur un deuxième trajet, le premier trajet et le deuxième trajet étant de grandeur identique.

3. Dispositif (112) selon la revendication 1, dans lequel le moyen d'ajustement (114) est réalisé pour déplacer la première unité de lentille (124) sur un premier trajet et pour déplacer la deuxième unité de lentille (126) sur un deuxième trajet, le premier trajet et le deuxième trajet étant de grandeur différente.

4. Dispositif (112) selon l'une quelconque des revendications précédentes, dans lequel le moyen d'ajustement (114) est réalisé pour déplacer la première unité de lentille (124) pendant une première durée et pour déplacer la deuxième unité de lentille (126) pendant une deuxième durée, la première durée et la deuxième durée commençant au même moment et étant de grandeur identique.

5. Dispositif (112) selon la revendication 4, dans lequel le moyen d'ajustement (114) est réalisé pour exercer pendant la première durée une première force sur la première unité de lentille (124) et pour exercer pendant la deuxième durée une deuxième force sur la deuxième unité de lentille (126), la première force et la deuxième force étant opposées l'une à l'autre et étant de grandeur identique.

6. Dispositif (112) selon l'une quelconque des revendications précédentes, comprenant un moyen capteur (120, 122) pour détecter une première valeur d'accélération qui représente une accélération de la première unité de lentille (124), et pour détecter une deuxième valeur d'accélération qui représente une accélération de la deuxième unité de lentille (126), dans lequel le moyen d'ajustement (114) est réalisé pour déplacer la première unité de lentille (124) et la deuxième unité de lentille (126) en utilisant la première valeur d'accélération et la deuxième valeur d'accélération.

7. Dispositif (112) selon l'une quelconque des revendications précédentes, comprenant deux premières articulations à corps solide (990) pour le montage mobile de la première unité de lentille (124) et deux deuxièmes articulations à corps solide (992) pour le montage mobile de la deuxième unité de lentille (126).

8. Appareil (100) d'usinage de matériau, présentant les particularités suivantes :
un moyen de fourniture, en particulier un laser (106), pour fournir un faisceau (102) ;
une première unité de lentille (124) disposée de manière mobile qui comprend une première lentille (108), et une deuxième unité de lentille (126) disposée de manière mobile qui comprend une deuxième lentille (110), dans lequel une trajectoire de faisceau du faisceau (102) est guidée à travers la première lentille (108) et la deuxième lentille (110) ; et
un dispositif (112) selon l'une quelconque des revendications précédentes pour l'ajustement de la mise au point de l'appareil (100).

9. Procédé permettant d'ajuster la mise au point pour un appareil (100) servant à l'usinage de matériau, qui présente une première unité de lentille (124) disposée de manière mobile qui comprend une première lentille (108) et une deuxième unité de lentille (126) disposée de manière mobile qui comprend une deuxième lentille (110), le procédé comprenant l'étape suivante consistant à :
déplacer (1701) la première unité de lentille (124) dans une première direction (116) et la deuxième unité de lentille (126) dans une deuxième direction (118) opposée à la première direction (116) afin d'ajuster une distance entre la première lentille (108) et la deuxième lentille (110) pour l'ajustement de la mise au point, **caractérisé en ce que** le moyen d'ajustement (114) est réalisé pour fournir un premier report d'impulsion à la première unité de lentille (124) pour déplacer la première lentille (108) dans la première direction (116), et pour fournir un deuxième report d'impulsion à la deuxième unité de lentille (126) pour déplacer la deuxième lentille (110) dans la deuxième direction (118), **caractérisé en ce que** le premier report d'impulsion et le deuxième report d'impulsion sont de grandeur identique.
